# EUROPEAN PATENT APPLICATION

(11) **EP 4 797 020 A1**
(43) Date of publication of application: **26.08.2026**
(21) Application number: 24884957.2
(22) Date of filing: 01.11.2024
(51) Int. Cl.: G05B 23/02

(54) **FAULT PROCESSING SYSTEM, FAULT DIAGNOSIS METHOD, AND INTELLIGENT DRIVING DEVICE**

(30) Priority: 03.11.2023 CN 202311458785
(71) Applicant: HUAWEI TECHNOLOGIES CO., LTD., Shenzhen 518129 (CN)
(72) Inventor: HUANG, Kangyong, Shenzhen, Guangdong 518129 (CN); CHEN, Huan, Shenzhen, Guangdong 518129 (CN); DING, Tao, Shenzhen, Guangdong 518129 (CN)
(74) Representative: Epping - Hermann - Fischer
(86) International application number: PCT/CN2024/129271
(87) International publication number: WO 2025/092959

(57) **Abstract**

A fault handling system, a fault diagnosis method, and an intelligent driving device are provided. The fault handling system includes an ECU, and the ECU includes a calculation unit and a control unit. The control unit is configured to receive a first instruction, where the first instruction is generated based on fault information of the calculation unit, and the control unit is further configured to perform, according to the first instruction, an operation used to rectify a fault of the calculation unit. In addition, the control unit may further receive a second instruction, and perform fault diagnosis according to the second instruction, to obtain a diagnosis result of the ECU. The solutions provided in this application may be applied to the field of intelligent driving. In a process of diagnosing the ECU of the intelligent driving device, when an SoC in the ECU is abnormal, the diagnosis result may still be obtained, and abnormality of the SoC can be cleared in time, to quickly restore availability of the ECU.

## Description

This application claims priority to Chinese Patent Application No. 202311458785.2, filed with the China National Intellectual Property Administration on November 3, 2023 and entitled "FAULT HANDLING SYSTEM, FAULT DIAGNOSIS METHOD, AND INTELLIGENT DRIVING DEVICE", which is incorporated herein by reference in its entirety.

### TECHNICAL FIELD

This application relates to the field of intelligent driving, and more specifically, to a fault handling system, a fault diagnosis method, and an intelligent driving device.

### BACKGROUND

With development of intelligence, a plurality of intelligent driving devices have emerged currently, for example, a vehicle, a smart home device, a robot, and an amusement device. Different quantities of electronic control units (electronic control units, ECUs) are deployed on these devices, and are configured to control traveling of the vehicle and implement various functions. If the ECU is faulty, performance or a function of the device is affected, and even personal safety is endangered. Therefore, a status of the ECU of the intelligent driving device needs to be diagnosed in time. In an implementation, a diagnosis apparatus performs operations such as reading fault code information, clearing a fault code, and flashing software according to a diagnosis instruction sent to a target ECU, to complete fault diagnosis on the target ECU.

Generally, a system-on-chip (system-on-chip, SoC) in the ECU is configured to receive a diagnosis instruction, and feed back a diagnosis result of the ECU according to the diagnosis instruction. However, when the SoC in the ECU is abnormal (for example, the SoC cannot be woken up from sleep), fault diagnosis on the ECU may not be completed, and a current diagnosis mechanism does not support forcibly performing pre-boot execution environment (pre-boot execution environment, PXE) upgrade and recovery on the SoC. As a result, when the SoC is abnormal, it is difficult to quickly restore availability of the ECU.

In view of this, a more reliable fault diagnosis and handling solution needs to be developed urgently.

### SUMMARY

This application provides a fault handling system, a fault diagnosis method, and an intelligent driving device, to clear abnormality of an SoC of an ECU in time in a fault diagnosis process of the ECU of the intelligent driving device, and quickly restore availability of the ECU.

According to a first aspect, a fault handling system is provided. The system includes an ECU. The ECU includes a calculation unit and a control unit. The control unit is configured to: receive a first instruction, where the first instruction is generated based on fault information of the calculation unit; and perform a first operation according to the first instruction, where the first operation is used to rectify a fault of the calculation unit.

In the foregoing technical solution, when the calculation unit is faulty, the control unit of the fault handling system can process the fault of the calculation unit, so that the ECU can quickly restore availability.

With reference to the first aspect, in some implementations of the first aspect, the first operation includes any one of the following: performing hot reset on the calculation unit, performing power-off reset on the calculation unit, performing power-on reset on the calculation unit, upgrading the calculation unit based on a PXE, switching the ECU to a burning mode, and switching the ECU to a recovery mode.

The foregoing technical solution provides a plurality of methods for handling the fault of the calculation unit, to cope with faults that are of the calculation unit and that are generated due to different causes.

With reference to the first aspect, in some implementations of the first aspect, the control unit is further configured to: receive a second instruction, where a packet type of the second instruction is the same as that of the first instruction; and perform fault diagnosis according to the second instruction, to obtain a first diagnosis result of the ECU.

In the foregoing technical solution, the control unit directly receives a diagnosis instruction from a gateway, to implement fault diagnosis. In this way, more abundant ECU diagnosis results can be obtained, and when the calculation unit is faulty, the diagnosis results obtained by the control unit may be further used to analyze a cause of the fault of the calculation unit. This facilitates fault recovery of calculation unit.

With reference to the first aspect, in some implementations of the first aspect, the first diagnosis result includes any one of the following: serial port information between the calculation unit and the control unit, information stored in a register, and status information related to the control unit. The status information related to the control unit includes at least one of the following: whether software of the control unit is faulty, a power-on/power-off state of the calculation unit, a heartbeat status between the control unit and the calculation unit, a validity state of the information stored in the register, and status information of a device associated with the control unit.

With reference to the first aspect, in some implementations of the first aspect, the control unit is further configured to forward the second instruction to the calculation unit, to enable the calculation unit to perform fault diagnosis according to the second instruction.

In the foregoing technical solution, when fault diagnosis is performed based on the control unit and the calculation unit is not faulty, the diagnosis instruction is forwarded to the calculation unit, so that the calculation unit performs fault diagnosis, and more diagnosis results can be obtained without switching a diagnosis mode.

With reference to the first aspect, in some implementations of the first aspect, the calculation unit is configured to: receive a third instruction, where a packet type of the third instruction is different from that of the first instruction; and perform fault diagnosis according to the third instruction, to obtain a second diagnosis result of the ECU.

In the foregoing technical solution, the calculation unit may also directly receive the diagnosis instruction from the gateway and perform fault diagnosis. When the control unit is faulty, the calculation unit may also obtain the diagnosis result. This helps improve robustness of the fault diagnosis system.

With reference to the first aspect, in some implementations of the first aspect, the system further includes a gateway. The gateway is configured to: obtain indication information, where the indication information indicates that a diagnosis mode of the ECU is a first diagnosis mode or a second diagnosis mode; and send a diagnosis instruction of a first packet type to the control unit in the first diagnosis mode; or send a diagnosis instruction of a second packet type to the calculation unit in the second diagnosis mode.

In the foregoing technical solution, the gateway switches the diagnosis mode according to the indication information, so that a diagnosis process is more reliable.

According to a second aspect, a fault diagnosis method is provided. The method is applied to an ECU, and the ECU includes a control unit and a calculation unit. The method includes: determining a target diagnosis mode of the ECU, where the target diagnosis mode includes a first diagnosis mode or a second diagnosis mode, the first diagnosis mode is a mode in which the control unit receives a diagnosis instruction and performs fault diagnosis, and the second diagnosis modular mode is a mode in which the calculation unit receives a diagnosis instruction and performs fault diagnosis; and controlling the ECU to perform fault diagnosis in the target diagnosis mode.

In the foregoing technical solution, the two diagnosis modes help obtain more ECU diagnosis information, and help quickly locate a fault when the ECU is faulty. For beneficial effect of another implementation of the second aspect, refer to the descriptions in the first aspect. Details are not described herein again.

With reference to the second aspect, in some implementations of the second aspect, the method further includes: when the target diagnosis mode is the first diagnosis mode, controlling the control unit to receive a first instruction, where the first instruction instructs to perform a first operation on the ECU, and the first operation is used to rectify a fault of the calculation unit.

With reference to the second aspect, in some implementations of the second aspect, the first operation includes any one of the following: performing hot reset on the calculation unit, performing power-off reset on the calculation unit, performing power-on reset on the calculation unit, upgrading the calculation unit based on a PXE, switching to a burning mode, and switching to a recovery mode.

With reference to the second aspect, in some implementations of the second aspect, when the target diagnosis mode is the first diagnosis mode, controlling the ECU to perform fault diagnosis in the target diagnosis mode includes: controlling the control unit to receive a second instruction, where the second instruction is used to obtain a first diagnosis result of the ECU, and a packet type of the second instruction is the same as that of the first instruction.

With reference to the second aspect, in some implementations of the second aspect, the first diagnosis result includes any one of the following: serial port information between the calculation unit and the control unit, information stored in a register, and status information related to the control unit. The status information related to the control unit includes at least one of the following: whether software of the control unit is faulty, a power-on/power-off state of the calculation unit, a heartbeat status between the control unit and the calculation unit, a validity state of the information stored in the register, and status information of a device associated with the control unit.

With reference to the second aspect, in some implementations of the second aspect, when the target diagnosis mode is the second diagnosis mode, controlling the ECU to perform fault diagnosis in the target diagnosis mode includes: controlling the calculation unit to receive a third instruction, where the third instruction is used to obtain a second diagnosis result of the ECU, and a packet type of the third instruction is different from that of the first interrupt instruction.

According to a third aspect, a fault diagnosis apparatus is provided. The apparatus includes a determining unit and a processing unit. The determining unit is configured to determine a target diagnosis mode of an ECU, and the target diagnosis mode includes a first diagnosis mode or a second diagnosis mode. The first diagnosis mode is a mode in which a control unit of the ECU receives a diagnosis instruction and performs fault diagnosis, and the second diagnosis modular mode is a mode in which a calculation unit of the ECU receives a diagnosis instruction and performs fault diagnosis. The processing unit is configured to control the ECU to perform fault diagnosis in the target diagnosis mode.

With reference to the third aspect, in some implementations of the third aspect, the processing unit is further configured to: when the target diagnosis mode is the first diagnosis mode, control the control unit to receive a first instruction, where the first instruction instructs to perform a first operation on the ECU, and the first operation is used to rectify a fault of the calculation unit.

With reference to the third aspect, in some implementations of the third aspect, the first operation includes any one of the following: performing hot reset on the calculation unit, performing power-off reset on the calculation unit, performing power-on reset on the calculation unit, switching to a burning mode, and switching to a recovery mode.

With reference to the third aspect, in some implementations of the third aspect, when the target diagnosis mode is the first diagnosis mode, the processing unit is configured to: control the control unit to receive a second instruction, where the second instruction is used to obtain a first diagnosis result of the ECU, and a packet type of the second instruction is the same as that of the first instruction.

With reference to the third aspect, in some implementations of the third aspect, the first diagnosis result includes any one of the following: serial port information between the calculation unit and the control unit, information stored in a register, and status information related to the control unit. The status information related to the control unit includes at least one of the following: a power-on/power-off state of the calculation unit, a heartbeat status between the control unit and the calculation unit, a validity state of the information stored in the register, and status information of a device associated with the control unit.

With reference to the third aspect, in some implementations of the third aspect, when the target diagnosis mode is the second diagnosis mode, the processing unit is configured to control the calculation unit to receive a third instruction, where the third instruction is used to obtain a second diagnosis result of the ECU, and a packet type of the third instruction is different from that of the first interrupt instruction.

With reference to any one of the first aspect to the third aspect, in some implementations of any one of the first aspect to the third aspect, the calculation unit includes an SoC, and the control unit includes an MCU.

According to a fourth aspect, a fault diagnosis apparatus is provided. The apparatus includes: a memory, configured to store a computer program; and a processor, configured to execute the computer program stored in the memory, to enable the apparatus to perform the method according to any one of the possible implementations of the second aspect.

According to a fifth aspect, an intelligent driving device is provided. The vehicle includes the system according to any possible implementation of the first aspect.

With reference to the fifth aspect, in some implementations of the fifth aspect, the intelligent driving device is a vehicle.

According to a sixth aspect, a computer program product is provided. The computer program product includes computer program code. When the computer program code is run on a computer, the computer is enabled to perform the method according to any one of the possible implementations of the second aspect.

It should be noted that all or some of computer program code may be stored in a first storage medium. The first storage medium may be encapsulated together with a processor, or may be encapsulated separately from a processor.

According to a seventh aspect, a computer-readable medium is provided. The computer-readable medium stores instructions, and when the instructions are executed by a processor, the processor is enabled to implement the method according to any possible implementation of the second aspect. According to an eighth aspect, a chip is provided. The chip includes a circuit. The circuit is configured to perform the method according to any one of the possible implementations of the second aspect.

### BRIEF DESCRIPTION OF DRAWINGS

FIG. 1 is a block diagram of a fault diagnosis system according to an embodiment of this application;
FIG. 2 is a block diagram of a fault handling system and a vehicle carrying the fault handling system according to an embodiment of this application;
FIG. 3 is a schematic flowchart of a fault diagnosis method according to an embodiment of this application;
FIG. 4 is a block diagram of a fault diagnosis apparatus according to an embodiment of this application; and
FIG. 5 is another block diagram of a fault diagnosis apparatus according to an embodiment of this application.

### DESCRIPTION OF EMBODIMENTS

To facilitate understanding of solutions in embodiments of this application, concepts in this application are described first.
1. Hot reset: The reset is an operation of restoring a circuit to an initial state. The hot reset is a reset operation performed when a circuit is in a power-on state.
2. Power-on and power-off reset Power-on reset is an operation of increasing a power supply voltage to a specific amplitude, so that a circuit is restored to an initial state. Power-off reset is an operation of reducing a power supply voltage to a specific amplitude, so that a circuit is restored to an initial state.
3. Burning mode: Burning refers to that an original program is compiled and then loaded to hardware. The burning mode includes a loader mode a maskrom mode. The loader mode is used to burn a bootloader (bootloader) of device firmware or software. In this mode, system firmware or a debugging tool is burned to upgrade or modify the system.
4. PXE: The PXE provides a mechanism for starting an electronic device through a network interface, so that startup of the electronic device does not depend on a local data storage device (for example, a hard disk) or a locally installed operating system.
5. Breakpoint: If an error (bug) exists in a program and the error cannot be accurately located, a breakpoint is set at a location where the error may occur. When program execution reaches the breakpoint, the program stops temporarily. In this case, data at the breakpoint can be output through printing, or the location of the error is determined in a manner such as step-by-step execution.
6. Serial port: The serial port is an interface standard. Data may be transmitted bit by bit between two apparatuses through a serial port. The serial port may include a universal asynchronous receiver/transmitter (universal asynchronous receiver/transmitter, UART) interface, a cluster communication port (cluster communication port, COM), a universal serial bus (universal serial bus, USB) interface, and the like. Serial port printing refers to a process of obtaining serial port logs. Serial port recording refers to serial port logs stored for a period of time on a serial port. Serial port recording is usually used to analyze and locate a serial port problem.

As described above, currently, an ECU in an intelligent driving device needs to be monitored and diagnosed, to quickly eliminate a fault on the ECU, and further eliminate a security risk. The intelligent driving device in this application may include a vehicle on a road, a vehicle on water, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be an intelligent robot, a smart home device, an unmanned aerial vehicle, an airplane, a ship, or the like.

The following describes the technical solutions in this application with reference to the accompanying drawings by using an example in which the intelligent driving device is a vehicle.

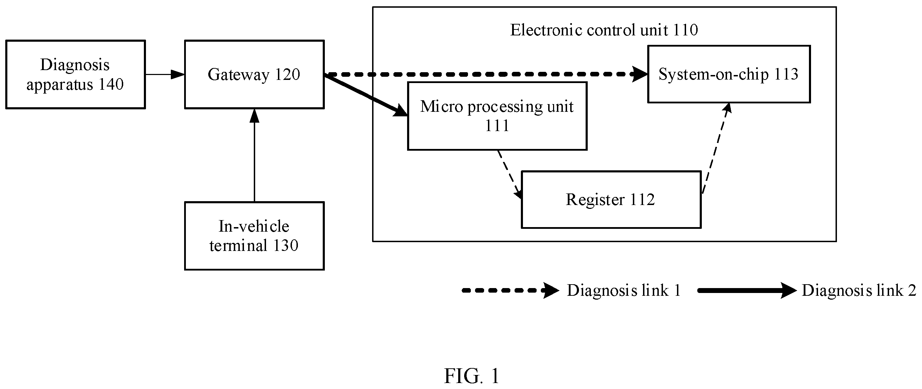

FIG. 1 is a block diagram of a fault diagnosis system according to an embodiment of this application. The fault diagnosis system is configured to diagnose and process a fault of an electronic control unit in a vehicle. As shown in FIG. 1, the fault diagnosis system includes an electronic control unit 110, a gateway 120, an in-vehicle terminal 130, and a diagnosis apparatus 140. The electronic control unit 110 includes a micro processing unit 111, a register 112, and a system-on-chip 113. The in-vehicle terminal 130 may include an information processing unit, for example, a telematics box (telematics box, T-box). The diagnosis apparatus 140 may be a near-end diagnosis instrument, or may be a remote diagnosis platform. The near-end diagnosis instrument may be connected to the gateway 120 through a diagnosis interface of the vehicle. The remote diagnosis platform may be a physical server, or may be a virtual server. When the remote diagnosis platform is the virtual server, the remote diagnosis platform may be located around the world and provide services for vehicles in different countries and areas. The remote diagnosis platform may communicate with the gateway 120 over a wireless network.

During fault diagnosis, the diagnosis apparatus 140 sends a diagnosis instruction to the electronic control unit 110 through the gateway 120, so as to diagnose the electronic control unit 110. In this application, the fault diagnosis system may include two diagnosis links: a diagnosis link 1: "diagnosis apparatus 140-gateway 120-system-on-chip 113", and a diagnosis link 2: "diagnosis apparatus 140-gateway 120-micro processing unit 111."

In the diagnosis link 1, when determining that the electronic control unit 110 is a to-be-diagnosed device, the diagnosis apparatus 140 sends a diagnosis instruction for the electronic control unit 110 to the gateway 120. After the in-vehicle terminal 130 successfully authenticates the diagnosis instruction, the gateway 120 sends the diagnosis instruction to the system-on-chip 113 according to an in-vehicle diagnostic protocol (diagnostic communication over Internet protocol, DoIP) based on the Ethernet. After receiving the diagnosis instruction, the system-on-chip 113 diagnoses the electronic control unit 110 according to the diagnosis instruction.

In the diagnosis link 2, when determining that the electronic control unit 110 is a to-be-diagnosed device, the diagnosis apparatus 140 sends a diagnosis instruction for the electronic control unit 110 to the gateway 120. After the in-vehicle terminal 130 successfully authenticates the diagnosis instruction, the gateway 120 sends the diagnosis instruction to the micro processing unit 111 according to an in-vehicle diagnostic (diagnostic communication over controller area network, DoCAN) protocol based on a controller local area network. After receiving the diagnosis instruction, the micro processing unit 111 diagnoses the electronic control unit 110 according to the diagnosis instruction, to obtain a diagnosis result.

In some implementations, when the system-on-chip 113 is faulty, the fault of the system-on-chip may be rectified over the diagnosis link 2. For example, the micro processing unit 111 may receive a fault handling instruction from the gateway 120, and perform an operation on the electronic control unit 110 or the system-on-chip 113 according to the fault handling instruction, to rectify the fault of the system-on-chip 113.

For example, the micro processing unit 111 may obtain the diagnosis result or rectify the fault of the system-on-chip via the register 112. The register 112 may be a complex programmable logic device (complex programmable logic device, CPLD) register, or may be another register.

The following uses an example in which the micro processing unit 111 is a microcontroller unit (microcontroller unit, MCU) and the system-on-chip 113 is an SoC to describe, with reference to Table 1, fault diagnosis that can be implemented over the diagnosis link 2 and a manner of rectifying the fault over the diagnosis link 2. Specifically, Table 1 shows functions that can be implemented over the diagnosis link 2, specific implementations of the functions, and devices required for implementing the functions.

**Table 1**

| **Number** | **Function** | **Implementation of the function** | **Device required for implementing the function** |
|---|---|---|---|
| 1 | Obtain serial port information | The MCU redirects to an SoC serial port of the MCU via a CPLD register, reads and records serial port information between the MCU and the SoC, and transmits the serial port information to the diagnosis apparatus frame by frame; and the MCU sends information about a serial port recording splicing and restoration tool to the diagnosis apparatus, and the serial port recording splicing and restoration tool is used to restore complete serial port recording information of the SoC | MCU |
| 2 | Obtain information stored in the CPLD | The MCU reads the information stored in the CPLD, and transmits the information stored in the CPLD to the diagnosis apparatus frame by frame; and the MCU sends the information about the serial port recording splicing and restoration tool to the diagnosis apparatus, and the serial port recording splicing and restoration tool is used to restore complete recording information of the CPLD | MCU |
| 3 | Obtain status information related to the MCU | The MCU determines whether the SoC is powered on and a heartbeat status between the SoC and the MCU | MCU |
| | | The MCU determines a validity state of the information stored in the CPLD, and status information of a fan, liquid cooling, a power supply, and the like of the ECU, for example, whether devices such as the fan, the liquid cooling, and the power supply of the ECU operate normally | |
| | | The MCU determines whether the MCU encounters a software fault | |
| 4 | Forcibly perform hot reset | The MCU configures the CPLD register, so that the CPLD register supports hot reset of the SoC. Hot reset is implemented when a basic input/output system (basic input/output system, BIOS) of the SoC reads the CPLD register | MCU |
| 5 | Forcibly switch to the burning mode | The MCU switches the ECU to the burning mode | MCU |
| 6 | Forcibly perform power-on and power-off reset | The MCU sets the CPLD register, so that the CPLD register supports power-on reset or power-off reset of the SoC, and implements power-on reset or power-off reset when the BIOS of the SoC reads the CPLD register | MCU |
| 7 | Forcibly boot (non-PXE boot) | 1. CPLD register forcibly boots a flag register. | Step 1 is performed by the CPLD, step 2 is performed by the MCU, and step 3 is performed by the BIOS |
| | | 2. The MCU forcibly boots a mode register, to reset the SoC according to a hot reset command | |
| | | 3. The MCU sets a flag bit of the CPLD register to the forcible boot flag bit. The BIOS reads a forcible boot flag of the CPLD register in a boot phase, applies the flag to a boot procedure, and controls the ECU to switch to a recovery mode | |
| | | 1. The MCU forcibly boots the mode register, to reset the SoC according to the hot reset command | |
| 8 | Forcibly perform PXE | 2. The BIOS of the SoC reads the forcible boot flag of the CLPD in the boot phase, applies the flag to the boot procedure, enters a PXE procedure, and supports the PXE boot component | Step 1 is performed by the MCU, and step 2 is performed by the BIOS |
| | | 3. Update the PXE based on obtained grub and grub.cfg configuration information and a PXE installation package | |

As shown in Table 1, the MCU may obtain any one of the following diagnosis results according to the diagnosis instruction: serial port information between the SoC and the MCU, information stored in the CPLD, or MCU-related status information. The information stored in the CPLD may include breakpoint information, or may further include other data stored in the CPLD. In addition, the MCU may further perform an operation according to the fault handling instruction to rectify a fault of the SoC. The operation performed by the MCU according to the fault handling instruction may include any operation shown in rows 4 to 8 and the second column in Table 1. For a specific implementation in which the micro processing unit 111 obtains the diagnosis result or removes the fault of the system-on-chip via the register 112, refer to the descriptions in Table 1. Details are not described herein again.

In specific implementation, the fault diagnosis system shown in FIG. 1 may have a plurality of methods for selecting a diagnosis link. In an example, in response to an operation of a user, the diagnosis apparatus 140 selects one link from the diagnosis link 1 and the diagnosis link 2 for diagnosis. Further, the diagnosis apparatus 140 may send indication information to the gateway 120, to indicate that the diagnosis link is the diagnosis link 1 or the diagnosis link 2. The indication information may be independently sent, or may be sent together with the diagnosis instruction. In still another example, the fault diagnosis system preferentially uses the diagnosis link 1 by default to perform diagnosis, and switches to the diagnosis link 2 to perform fault diagnosis when diagnosis performed over the diagnosis link 1 fails (for example, the system-on-chip 113 does not feed back a diagnosis result within preset duration). For example, when the gateway 120 fails to receive the diagnosis information within a period of time after sending the diagnosis instruction according to the DoIP, the gateway 120 sends the diagnosis instruction according to the DoCAN protocol. Alternatively, the fault diagnosis system may preferentially use the diagnosis link 2 for diagnosis by default, and switch to the diagnosis link 1 for fault diagnosis when diagnosis performed over the diagnosis link 2 fails.

For example, after the gateway 120 separately sends the diagnosis instruction to the electronic control unit 110 over the diagnosis link 1 and the diagnosis link 2, when diagnosis instructions of different diagnosis links are forwarded inside the electronic control unit 110, different controller local area network identifiers (controller area network identifiers, CAN IDs) are used for addressing. In other words, the electronic control unit 110 may include instructions of different diagnosis links in CAN packets with different IDs. For example, in the diagnosis link 1, an existing CAN ID may be used to identify the system-on-chip 113 in the electronic control unit 110, so that when sending an instruction (for example, a diagnosis instruction) to the electronic control unit 110 over the diagnosis link 1, the gateway 120 can directly send the instruction to the system-on-chip 113. In the diagnosis link 2, the newly added CAN ID may be used to identify the micro processing unit 111 in the electronic control unit 110, so that when sending an instruction (for example, a diagnosis instruction or a fault handling instruction) to the electronic control unit 110 over the diagnosis link 2, the gateway 120 can directly send the instruction to the micro processing unit 111.

Based on the fault diagnosis system shown in FIG. 1, an embodiment of this application provides a fault handling system. The system includes an ECU. The ECU includes a calculation unit and a control unit. The control unit is configured to: receive a first instruction, where the first instruction is generated based on fault information of the calculation unit; and perform a first operation according to the first instruction, where the first operation is used to rectify a fault of the calculation unit.

For example, the calculation unit may include a system-on-chip 113, the control unit may include a micro processing unit 111, the first instruction may include the fault handling instruction in the foregoing embodiment, and the first operation may include any one of the following: performing hot reset on the calculation unit, performing power-off reset on the calculation unit, performing power-on reset on the calculation unit, upgrading the calculation unit based on a PXE, switching the ECU to a burning mode, and switching the ECU to a recovery mode.

For example, when the fault information of the calculation unit indicates that the calculation unit is repeatedly reset in a BIOS boot phase, the first instruction may be an instruction for instructing the control unit to perform power-on reset or power-off reset on the calculation unit, and the first operation may be performing power-on reset on the calculation unit or power-off reset on the calculation unit; or when the fault information of the calculation unit indicates that software of the calculation unit is faulty, the first instruction may be an instruction that instructs the control unit to upgrade the calculation unit based on the PXE, and the first operation may be upgrading the calculation unit based on the PXE.

In some implementations, the first instruction may alternatively be generated based on information about another fault of the ECU other than the fault of the calculation unit, and the control unit performs, based on the first instruction, an operation used to rectify the another fault of the ECU. That the control unit is configured to receive the first instruction may be understood as that the control unit directly receives the first instruction from a gateway.

For example, if the another fault of the ECU may be an abnormal partition of the ECU, the first instruction may be an instruction that instructs the control unit to switch the ECU to a recovery mode; or if the another fault of the ECU may be a platform software startup failure of the ECU, the first instruction may be an instruction that instructs to forcibly boot or forcibly perform PXE. In some implementations, the control unit is further configured to: receive a second instruction, where a packet type of the second instruction is the same as that of the first instruction; and perform fault diagnosis according to the second instruction, to obtain a first diagnosis result of the ECU.

That the packet types are the same may be understood as that IDs of CAN packets carrying the first instruction and the second instruction are the same. For example, the CAN IDs of packets carrying the first instruction and the second instruction are both newly added CAN IDs. Alternatively, that the packet types are the same may be understood as that communication channels for transmitting the first instruction and the second instruction are the same, for example, both are DoCAN protocol-based communication channels.

For example, the second instruction may include the diagnosis instruction transmitted on the diagnosis link 2 in the foregoing embodiment. The first diagnosis result may include content shown in the first row to the third row and the second column in Table 1, that is, the first diagnosis result may include at least one of the following: serial port information between the calculation unit and the control unit, information stored in a register, and status information related to the control unit. The status information related to the control unit includes at least one of the following: whether software of the control unit is faulty, a power-on/power-off state of the calculation unit, a heartbeat status between the control unit and the calculation unit, a validity state of the information stored in the register, and status information of a device associated with the control unit.

The information stored in the register may include information of a CPLD interrupt point and serial port information of the CPLD. The serial port information may include a serial port log. The device associated with the control unit may include a device like a fan, liquid cooling, or a power supply of the ECU, and the status information of the device associated with the control unit may include information about whether the device like the fan, the liquid cooling, or the power supply of the ECU operates normally, or the status information of the device associated with the control unit may include whether status of the device like the fan, the liquid cooling, and the power supply of the ECU meet a power-on condition of the ECU.

In a process of diagnosing the ECU, the first diagnosis result may be used to determine whether the ECU is faulty, and in particular, whether the calculation unit is faulty. In this way, when determining that the calculation unit is faulty, the control unit may rectify the fault of the calculation unit according to a corresponding instruction (for example, the first instruction).

For example, the association relationship between the first diagnosis result, a fault type of the ECU, and the first instruction may be shown in Table 2.

**Table 2**

| Status of the ECU | First diagnosis result | Fault type of the ECU | First instruction |
|---|---|---|---|
| The ECU fails to be started, power supply of the ECU is normal, and there is serial port information on a serial port between the calculation unit and control unit | The serial port information between the calculation unit and the control unit indicates that the calculation unit is repeatedly reset in a BIOS startup phase | Software of the calculation unit is faulty | Instruction for instructing to perform power-on reset or power-off reset on the calculation unit |
| | Serial port information between the calculation unit and the control unit indicates that the calculation unit is repeatedly reset in an input/output system (input/output system, OS) phase | Software of the calculation unit is faulty | Instruction for instructing the control unit to upgrade the calculation unit based on the PXE |
| The ECU is started successfully, but debugging is abnormal | Historical startup information indicates that a partition exists and network configuration of a root file system (rootfs) is incorrect | Abnormal partition of the ECU | Instruction for instructing the ECU to switch to the recovery mode |

In some implementations, the control unit may further forward the second instruction to the calculation unit, to enable the calculation unit to perform fault diagnosis according to the second instruction.

For example, the second instruction may be an instruction used to obtain a temperature of an SoC board, or may be an instruction used to obtain system time of the SoC, or may be another instruction.

In some implementations, the calculation unit may be configured to: receive a third instruction, where a packet type of the third instruction is different from that of the first instruction; and perform fault diagnosis according to the third instruction, to obtain a second diagnosis result of the ECU.

For example, that the packet types are different may be understood as that IDs of CAN packets carrying the first instruction and the third instruction are different. For example, a CAN ID of a packet carrying the first instruction is a newly added CAN ID, and a CAN ID of a packet carrying the third instruction is an existing CAN ID. Alternatively, that the packet types are different may be understood as that communication channels for transmitting the first instruction and the third instruction are different. For example, a communication channel for transmitting the first instruction is a DoCAN protocol-based communication channel, and a communication channel for transmitting the third instruction is a DoIP-based communication channel.

For example, the third instruction may be an existing instruction for obtaining the diagnosis result based on the SoC. For example, the third instruction may be an instruction for reading ECU fault code information, or the third instruction may be an instruction for clearing ECU diagnosis information. Correspondingly, the second diagnosis result may be a result that the ECU fault code information or the ECU diagnosis information is cleared. That the calculation unit receives the third instruction may be understood as that the calculation unit directly receives the third instruction from the gateway.

In some implementations, the fault handling system further includes a gateway. The gateway is configured to: obtain indication information, where the indication information indicates that a diagnosis mode of the ECU is a first diagnosis mode or a second diagnosis mode; and send a diagnosis instruction of a first packet type to the control unit in the first diagnosis mode; or send a diagnosis instruction of a second packet type to the calculation unit in the second diagnosis mode. For example, the first diagnosis mode may be performing diagnosis over the diagnosis link 2 in the foregoing embodiment, and the second diagnosis mode may be performing diagnosis over the diagnosis link 1 in the foregoing embodiment.

For example, the indication information may be generated in response to a user operation. For details, refer to the descriptions in the foregoing embodiments. Alternatively, the indication information may be a response status of the ECU to the diagnosis instruction. For example, when the gateway sends the diagnosis instruction to the ECU in a diagnosis mode and receives a diagnosis result of the ECU within preset duration, the gateway may determine, based on a case in which the ECU does not respond to the diagnosis instruction within preset duration, to send the diagnosis instruction to the ECU in another diagnosis mode. Alternatively, the indication information may be generated in another manner.

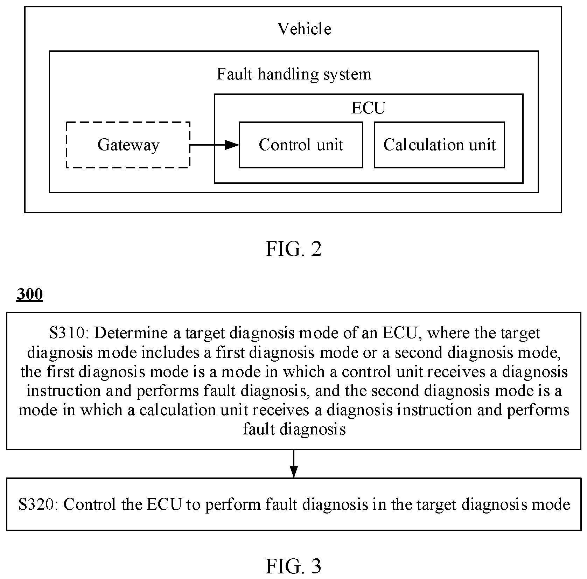

Based on the fault handling system provided in this application, an embodiment of this application further provides a vehicle. As shown in FIG. 2, the vehicle includes the fault handling system in the foregoing embodiment.

It should be noted that the vehicle shown in FIG. 2 is merely an example. In specific implementation, the vehicle may include a plurality of ECUs, and may further include at least one domain controller. The domain controller implements data receiving and sending between the domain controller and the ECU through a gateway. Each of the plurality of ECUs may perform fault diagnosis over the diagnosis link 1 or the diagnosis link 2. When the SoC in the ECU is faulty, the fault of the SoC may be rectified over the diagnosis link 2. In addition, when the domain controller includes an MCU and the SoC, fault diagnosis or fault handling may also be performed on the domain controller according to the foregoing method. In other words, the domain controller may also be considered as an example of the electronic control unit 110 in the foregoing embodiment. Further, the fault handling system provided in this application may include one or more ECUs, and may further include one or more domain controllers.

The domain controller in this application may be one or more of a vehicle domain controller (vehicle domain controller, VDC), an advanced driving domain controller (advanced driving domain controller, ADC), and a cockpit domain controller (cockpit domain controller, CDC). For another example, the domain controller may alternatively be one or more of an in-car application-server (in-car application-server, ICAS) controller, a body domain controller (body domain controller, BDC), a special equipment system (special equipment system, SAS), a media graphics unit (media graphics unit, MGU), a body super core (body super core, BSC), or an advanced driving assistant system super core (advanced driving assistant system super core, ADAS super core). This is not limited in this application. The ICAS may include at least one of the following: a vehicle control server ICAS 1, an intelligent driving server ICAS 2, an intelligent cockpit server ICAS 3, and an information entertainment server ICAS 4.

The foregoing describes the system provided in embodiments of this application. The following describes in a fault diagnosis method provided in embodiments of this application.

FIG. 3 is a schematic flowchart of a fault diagnosis method according to an embodiment of this application. A method 300 shown in FIG. 3 may be applied to the system shown in FIG. 1 or the vehicle shown in FIG. 2. For example, the method 300 may be performed by the diagnosis apparatus 140 or a chip disposed in the diagnosis apparatus 140, or the method 300 may be performed by an ECU or a domain controller in a vehicle. The method 300 may include S310 and S320.

S310: Determine a target diagnosis mode of an ECU, where the target diagnosis mode includes a first diagnosis mode or a second diagnosis mode, the first diagnosis mode is a mode in which a control unit receives a diagnosis instruction and performs fault diagnosis, and the second diagnosis modular mode is a mode in which a calculation unit receives a diagnosis instruction and performs fault diagnosis.

For example, the first diagnosis mode and the second diagnosis mode may be modes described in the foregoing embodiments. In an implementation, the target diagnosis mode of the ECU may be determined in response to an operation of a user. For example, if the user chooses, through an interaction interface connected to the diagnosis apparatus 140, to perform diagnosis over a diagnosis link 2, the target diagnosis mode is the first diagnosis mode; or if the user chooses, through the interaction interface connected to the diagnosis apparatus 140, to perform diagnosis over a diagnosis link 1, the target diagnosis mode is the second diagnosis mode. In another implementation, the target diagnosis mode may be determined based on a diagnosis link that is preferentially used by a fault diagnosis system by default. For example, if the diagnosis link that is preferentially used by default is the diagnosis link 1, the target diagnosis mode is the second diagnosis mode. In still another implementation, a target diagnosis mode to be subsequently used may be determined based on a response status of the ECU to the diagnosis instruction. For example, after delivering the diagnosis instruction in the current diagnosis mode, the diagnosis apparatus 140 fails to receive, within preset duration, a diagnosis result reported by the ECU. In this case, the diagnosis apparatus 140 may switch the target diagnosis mode to another diagnosis mode.

S320: Control the ECU to perform fault diagnosis in the target diagnosis mode.

In some implementations, the method further includes: when the target diagnosis mode is the first diagnosis mode, controlling the control unit to receive a first instruction, where the first instruction instructs to perform a first operation on the ECU, and the first operation is used to rectify a fault of the calculation unit.

The first instruction may include the first instruction in the foregoing embodiment, and the first operation may include the first guarantee described in the foregoing embodiment. Controlling the control unit to receive the first instruction may include: instructing a gateway to send the first instruction over the diagnosis link 2.

In some implementations, when the target diagnosis mode is the first diagnosis mode, controlling the ECU to perform fault diagnosis in the target diagnosis mode includes: controlling the control unit to receive a second instruction, where the second instruction is used to obtain a first diagnosis result of the ECU, and a packet type of the second instruction is the same as that of the first instruction.

The second instruction may include the second instruction in the foregoing embodiment, and the first diagnosis result may include the first diagnosis result described in the foregoing embodiment. Controlling the control unit to receive the second instruction may include: instructing the gateway to send the second instruction over the diagnosis link 2.

In some implementations, when the target diagnosis mode is the second diagnosis mode, controlling the ECU to perform fault diagnosis in the target diagnosis mode includes: controlling the calculation unit to receive a third instruction, where the third instruction is used to obtain a second diagnosis result of the ECU, and a packet type of the third instruction is different from that of the first interrupt instruction.

The third instruction may include the third instruction in the foregoing embodiment, and the second diagnosis result may include the second diagnosis result described in the foregoing embodiment. Controlling the control unit to receive the third instruction may include: instructing the gateway to send the third instruction over the diagnosis link 1.

The fault diagnosis method provided in this embodiment of this application relates to two diagnosis modes. Each of the two diagnosis modes corresponds to one diagnosis link. The two diagnosis modes can obtain more ECU diagnosis information, and help quickly locate a fault when the ECU is faulty. In addition, when the calculation unit in the ECU is faulty, the ECU may be quickly accessed in the first diagnosis mode, and the fault information of the ECU is obtained. This helps quickly eliminate the fault of the calculation unit via a first diagnosis module, and helps quickly restore availability of the ECU.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

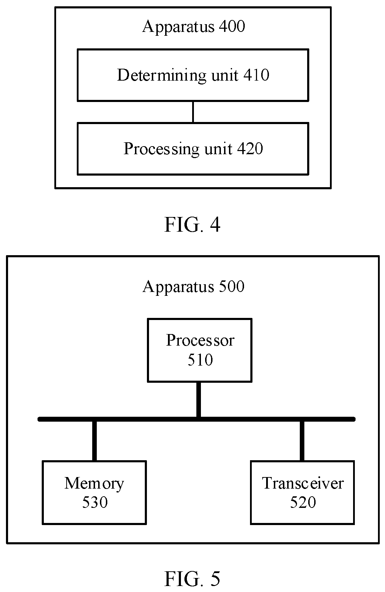

The foregoing describes in detail the fault handling system and the fault diagnosis method provided in embodiments of this application with reference to FIG. 2 and FIG. 3. The following describes a fault diagnosis apparatus provided in embodiments of this application with reference to FIG. 4 and FIG. 5. It should be understood that descriptions of the fault diagnosis apparatus embodiments correspond to the descriptions of the method embodiments. Therefore, for content that is not described in detail, refer to the method embodiments. For brevity, details are not described herein. FIG. 4 is a block diagram of a fault diagnosis apparatus 400 according to an embodiment of this application. The apparatus 400 may include units configured to perform the method in FIG. 3. In addition, the units in the apparatus 400 are configured to implement a corresponding procedure in the foregoing method embodiment in FIG. 4.

Specifically, the apparatus 400 includes a determining unit 410 and a processing unit 420. The determining unit 410 is configured to: determine a target diagnosis mode of an ECU. The target diagnosis mode includes a first diagnosis mode or a second diagnosis mode, the first diagnosis mode is a mode in which a control unit receives a diagnosis instruction and performs fault diagnosis, and the second diagnosis mode is a mode in which a calculation unit receives a diagnosis instruction and performs fault diagnosis. The processing unit 420 is configured to control the ECU to perform fault diagnosis in the target diagnosis mode.

In some implementations, the processing unit 420 is further configured to: when the target diagnosis mode is the first diagnosis mode, control the control unit to receive a first instruction, where the first instruction instructs to perform a first operation on the ECU, and the first operation is used to rectify a fault of the calculation unit.

In some implementations, when the target diagnosis mode is the first diagnosis mode, the processing unit 420 is configured to control the control unit to receive a second instruction, where the second instruction is used to obtain a first diagnosis result of the ECU, and a packet type of the second instruction is the same as that of the first instruction.

In some implementations, when the target diagnosis mode is the second diagnosis mode, the processing unit 420 is configured to control the calculation unit to receive a third instruction, where the third instruction is used to obtain a second diagnosis result of the ECU, and a packet type of the third instruction is different from that of the first interrupt instruction.

The calculation unit may include an SoC, and the control unit may include an MCU.

For example, the apparatus 400 may be disposed in the diagnosis apparatus 140 shown in FIG. 1. In some implementations, the apparatus 400 may alternatively be disposed in the electronic control unit 110 shown in FIG. 1. In a specific implementation, actions performed by the determining unit 410 and the processing unit 420 may be implemented by one processor, or may be implemented by a plurality of processors. In specific implementation, the apparatus 400 may alternatively be a chip in the diagnosis apparatus 140 or the electronic control unit 110.

In this embodiment of this application, the processor is a circuit having a signal processing capability. In an implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

FIG. 5 is another block diagram of a fault diagnosis apparatus according to an embodiment of this application. A fault diagnosis apparatus 500 shown in FIG. 5 may include a processor 510, a transceiver 520, and a memory 530. The processor 510, the transceiver 520, and the memory 530 are connected through an internal connection path. The memory 530 is configured to store instructions. The processor 510 is configured to execute the instructions stored in the memory 530, to implement the method in the foregoing embodiments. Optionally, the memory 530 may be coupled to the processor 510 through an interface, or may be integrated with the processor 510.

It should be noted that the transceiver 520 may include but is not limited to a transceiver apparatus like an input/output interface (input/output interface), to implement communication between the apparatus 500 and another device or a communication network.

The memory 530 may be a ROM, a static storage device, a dynamic storage device, or a RAM. The memory 530 may include the main memory module 140 shown in FIG. 1, or may further include a buffer module 130.

The transceiver 520 uses, for example, but is not limited to, a transceiver apparatus of a transceiver type, to implement communication between the apparatus 510 and another device or a communication network, to receive/send data/information used to implement the methods in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein. In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefix words should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fault handling system, comprising an electronic control unit ECU, wherein the ECU comprises a calculation unit and a control unit, and the control unit is configured to:
receive a first instruction, wherein the first instruction is generated based on fault information of the calculation unit; and
perform a first operation according to the first instruction, wherein the first operation is used to rectify a fault of the calculation unit.

2. The system according to claim 1, wherein the first operation comprises any one of the following: performing hot reset on the calculation unit, performing power-off reset on the calculation unit, performing power-on reset on the calculation unit, upgrading the calculation unit based on a pre-boot execution environment PXE, switching the ECU to a burning mode, and switching the ECU to a recovery mode.

3. The system according to claim 1 or 2, wherein the control unit is further configured to:
receive a second instruction, wherein a packet type of the second instruction is the same as that of the first instruction; and
perform fault diagnosis according to the second instruction, to obtain a first diagnosis result of the ECU.

4. The system according to claim 3, wherein the first diagnosis result comprises any one of the following: serial port information between the calculation unit and the control unit, information stored in a register, and status information related to the control unit, wherein
the status information related to the control unit comprises at least one of the following: whether software of the control unit is faulty, a power-on/power-off state of the calculation unit, a heartbeat status between the control unit and the calculation unit, a validity state of the information stored in the register, and status information of a device associated with the control unit.

5. The system according to claim 3 or 4, wherein the control unit is further configured to forward the second instruction to the calculation unit, to enable the calculation unit to perform fault diagnosis according to the second instruction.

6. The system according to any one of claims 1 to 5, wherein the calculation unit is configured to:
receive a third instruction, wherein a packet type of the third instruction is different from that of the first instruction; and
perform fault diagnosis according to the third instruction, to obtain a second diagnosis result of the ECU.

7. The system according to any one of claims 1 to 6, wherein the calculation unit comprises a system-on-chip SoC, and the control unit comprises a microcontroller unit MCU.

8. The system according to any one of claims 1 to 7, further comprising a gateway, wherein the gateway is configured to:
obtain indication information, wherein the indication information indicates that a diagnosis mode of the ECU is a first diagnosis mode or a second diagnosis mode; and
send a diagnosis instruction of a first packet type to the control unit in the first diagnosis mode; or
send a diagnosis instruction of a second packet type to the calculation unit in the second diagnosis mode.

9. A fault diagnosis method, applied to an electronic control unit ECU, wherein the ECU comprises a control unit and a calculation unit, and the method comprises:
determining a target diagnosis mode of the ECU, wherein the target diagnosis mode comprises a first diagnosis mode or a second diagnosis mode, wherein
the first diagnosis mode is a mode in which the control unit receives a diagnosis instruction and performs fault diagnosis, and the second diagnosis modular mode is a mode in which the calculation unit receives a diagnosis instruction and performs fault diagnosis; and
controlling the ECU to perform fault diagnosis in the target diagnosis mode.

10. The method according to claim 9, wherein the method further comprises:
when the target diagnosis mode is the first diagnosis mode, controlling the control unit to receive a first instruction, wherein the first instruction instructs to perform a first operation on the ECU, and the first operation is used to rectify a fault of the calculation unit.

11. The method according to claim 10, wherein the first operation comprises any one of the following: performing hot reset on the calculation unit, performing power-off reset on the calculation unit, performing power-on reset on the calculation unit, upgrading the calculation unit based on a pre-boot execution environment PXE, switching to a burning mode, and switching to a recovery mode.

12. The method according to claim 10 or 11, wherein when the target diagnosis mode is the first diagnosis mode, controlling the ECU to perform fault diagnosis in the target diagnosis mode comprises:
controlling the control unit to receive a second instruction, wherein the second instruction is used to obtain a first diagnosis result of the ECU, and a packet type of the second instruction is the same as that of the first instruction.

13. The method according to claim 12, wherein the first diagnosis result comprises any one of the following: serial port information between the calculation unit and the control unit, information stored in a register, and status information related to the control unit, wherein
the status information related to the control unit comprises at least one of the following: whether software of the control unit is faulty, a power-on/power-off state of the calculation unit, a heartbeat status between the control unit and the calculation unit, a validity state of the information stored in the register, and status information of a device associated with the control unit.

14. The method according to any one of claims 10 to 13, wherein when the target diagnosis mode is the second diagnosis mode, controlling the ECU to perform fault diagnosis in the target diagnosis mode comprises:
controlling the calculation unit to receive a third instruction, wherein the third instruction is used to obtain a second diagnosis result of the ECU, and a packet type of the third instruction is different from that of the first interrupt instruction.

15. The method according to any one of claims 9 to 14, wherein the calculation unit comprises a system-on-chip SoC, and the control unit comprises a microcontroller unit MCU.

16. An intelligent driving device, comprising the system according to any one of claims 1 to 8.

17. A computer-readable storage medium, wherein the computer-readable storage medium stores instructions; and when the instructions are executed by a processor, the processor is enabled to implement the method according to any one of claims 9 to 15.

18. A chip, wherein the chip comprises a circuit, and the circuit is configured to perform the method according to any one of claims 9 to 15.
